# EUROPÄISCHE PATENTSCHRIFT

(11) **EP 1 010 595 B1**
(45) Veröffentlichungstag und Bekanntmachung des Hinweises auf die Patenterteilung: **05.04.2006**
(21) Anmeldenummer: 99123947.6
(22) Anmeldetag: 03.12.1999
(51) Int. Cl.: B60T 7/06, G05G 1/14

(54) **Fahrzeugpedal**
Vehicle pedal
Pédale d'un véhicule

(30) Priorität: 18.12.1998 DE 19858698
(43) Veröffentlichungstag der Anmeldung: 21.06.2000
(73) Patentinhaber: SIEMENS AKTIENGESELLSCHAFT, 80333 München (DE)
(72) Erfinder: Hannewald, Thomas, 64347 Griesheim (DE); Zenker, Reinhard, 61462 Königstein (DE)

(56) Entgegenhaltungen:
- EP-A- 0 393 974
- US-A- 4 356 740
- US-A- 4 944 269

## Beschreibung

Die Erfindung bezieht sich auf ein Fahrzeugpedal mit einer Pedalstange und einer drehstarr mit dieser verbundenen Pedalwelle, an welcher Lagerstellen vorgesehen sind, wobei die Pedalstange seitlich der beiden Lagerstellen an der Pedalwelle angeformt ist.

Derartige Fahrzeugpedale finden beispielsweise als Fahrpedal in Kraftfahrzeugen Verwendung. Üblicherweise sind die Pedalstange und die Pedalwelle von bekannten Fahrpedalen als Einzelteile getrennt voneinander ausgebildet, die mit Hilfe eines Aluminiumblockes und Haltestiften drehstarr aneinander festgelegt werden. Hierzu ist es notwendig, daß sowohl die Pedalwelle als auch die Pedalstange Bohrungen zum Einführen der Befestigungsstifte aufweisen. Zudem gestaltet sich die Montage der beiden Teile aneinander aufwendig. Entweder wird die Pedalstange erst nach der Montage der Pedalwelle in ihren Lagerstellen befestigt, was durch den zur Verfügung stehenden knappen Freiraum erschwert ist, oder die Pedalstange wird zuvor an der Pedalwelle festgelegt, was, sofern eine solche Montageabfolge überhaupt möglich ist, zu einer erheblich erschwerten Montage der Pedalwelle in den Lagerstellen führt.

Aus der US-A-43 56 740 ist ein Fahrzeugpedal der eingangs genannten Art bekannt, bei dem die Pedalwelle seitlich der beiden Lagerstellen an die Pedalstange angeschweißt ist.

Die Aufgabe der Erfindung besteht darin, ein Fahrzeugpedal zu schaffen, das einfach herzustellen ist und eine einfache Montage in seinen Lagerstellen erlaubt.

Erfindungsgemäß wird die Aufgabe dadurch gelöst, daß die Pedalstange und die Pedalwelle einstückig ausgebildet sind, wobei die im Querschnitt kreisförmige Pedalstange an ihrem Ende zur Bildung der Pedalwelle im wesentlichen rechtwinklig abgekröpft ist

Mit Hilfe des erfindungsgemäßen Fahrzeugpedals ist es ohne weiteres möglich, die aus Pedalstange und Pedalwelle vormontierte Einheit von einer Seite her in die Lagerstellen einzuschieben. Zudem besteht zwischen den Lagerstellen kein Raumbedarf für die Pedalstange, so daß einerseits eine freie Anordnung der Lagerstellen selbst sowie die Anordnung weiterer Bauelemente, wie z. B. einer Rückstellfeder für das Fahrpedal, zwischen den Lagerstellen ohne weiteres möglich ist.

Eine derartige Einheit aus Pedalstange und Pedalwelle läßt sich sehr einfach und kostengünstig in hohen Stückzahlen herstellen. Der kreisförmige Querschnitt der Pedalstange erlaubt es, die Pedalwelle unmittelbar in Lagerelementen zu lagern. Im Übergangsbereich zwischen der Pedalstange und der Pedalwelle kann eine U-förmige Kröpfung vorgesehen sein, so daß die gedachte Verlängerung der Pedalstange ungefähr im mittleren Bereich der Pedalwelle liegt. Auf diese Weise ergibt sich eine Lage der Pedalstange bezüglich der Pedalwelle, wie sie bei bekannten Fahrpedalen anzutreffen ist.

Gegenstand der Erfindung ist auch ein Fahrpedalmodul zur Lagerung des zuvor beschriebenen Fahrzeugpedals. Bei einem solchen Fahrpedalmodul ist erfindungsgemäß vorgesehen, daß die beiden Lagerstellen der Pedalwelle über Lager verfügen, die in auf einer Grundplatte, angeordneten Lagerböcken festgelegt sind.

Eine derartige Anordnung der Lager in Lagerböcken auf einer Grundplatte, die beispielsweise kostengünstig aus Blech geformt sein kann, führt zu besonders niedrigen Herstellungskosten des gesamten Moduls. Dabei kann wenigstens ein Lagerbock einstückig mit der Grundplatte ausgebildet sein und/oder wenigstens ein Lagerbock kann auf der Grundplatte aufgeschweißt sein. Insbesondere gegenüber aufwendig zu montierenden Lagergehäusen ergibt sich durch die Grundplatte mit den Lagerböcken eine erhebliche Einsparung.

Als Lager für die Pedalwelle finden vorzugsweise Bundbuchsen Verwendung, die in Öffnungen in den Lagerböcken eingefügt sind. Gewöhnlich genügen einfache Bundbuchsen aus Kunststoff, für höhere Anforderungen sind jedoch auch Bundbuchsen aus Buntmetall oder Wälzlager denkbar.

Die axiale Festlegung der Pedalwelle mit Bezug auf die Lager kann in üblicher Weise mit Federringen vorgenommen werden, wobei sich eine Ausführungsform der Erfindung als zweckmäßig erwiesen hat, bei welcher zwischen der äußeren Bundbuchse und dem freien Ende der Pedalwelle auf dieser ein Federring axial festgelegt ist, der sich einerseits an dem Bund der Buchse und andererseits an einem an dem zugehörigen Lagerbock oder an der Grundplatte festgelegten zweiten Federring axial abstützt. Bei dieser Anordnung genügt das Montieren eines einzigen Federrings, um die Pedalwelle in beiden Richtungen axial festzulegen.

In weiterer bevorzugter Ausbildung der Erfindung ist das freie Ende der Pedalwelle axial ausrückbar mit einem Drehwinkelsensor beispielsweise in der Weise gekoppelt, daß das freie Ende der Pedalwelle geschlitzt ist und ein Klauenelement des Sensors in den Schlitz eingreift.

Gegenüber bekannten Ankopplungen der Sensoren, bei denen ein bewegliches Teil des Sensors, beispielsweise der Schleifer eines Potentiometers, fest der Pedalwelle zugeordnet war, ergibt sich bei der zuvor beschriebenen Ausführungsform neben der einfachen Montage die Möglichkeit, defekte Sensoren schnell und kostengünstig austauschen zu können. Hierzu ist nur das Lösen der Befestigungselemente des Sensors und seiner elektrischen Verbindung notwendig.

Bei elektronischen Fahrpedalen ist es zumeist erwünscht, daß das Fahrpedal ähnlich den frühüblichen Seilzugsystemen eine Krafthysterese aufweist. Bei dem zuvor beschriebenen Fahrpedal läßt sich eine solche Hysterese in besonders einfacher und kostengünstiger Weise dadurch erreichen, daß zwischen den Lagerstellen der Pedalwelle drehfest mit Bezug auf die Grundplatte eine Kunststoffhülse angeordnet ist, die einen radialen Anpreßdruck auf die Umfangsfläche der Pedalwelle ausübt. Das entstehende Reibmoment verringert die Haltekräfte des Pedals in der gewünschten Weise und verbessert dadurch den Fahrkomfort. Die Kunststoffhülse kann ohne wesentliche Erhöhung des Montageaufwands beim Einstecken der Pedalwelle in die Lager montiert werden. Da zwischen den beiden Lagerstellen kein Bauraum für die Pedalstange erforderlich ist, kann der gesamte axiale Bauraum zwischen den Lagerstellen von der Kunststoffhülse eingenommen werden.

Vorzugsweise verfügt die Kunststoffhülse über eine Andruckfeder, die den radialen Anpreßdruck aufbringt oder erhöht.

Die Andruckfeder sorgt dafür, daß auch nach längerer Betriebsdauer noch ein ausreichender Anpreßdruck zum Erzeugen der Hysterese zur Verfügung steht. Zwar kann grundsätzlich der Anpreßdruck auch durch eine entsprechend enge Passung der Innenbohrung der Hülse erreicht werden, jedoch kann es dann im Laufe des Betriebes zu einer Veränderung der Reibmomente mit einer entsprechenden Beeinflussung der Krafthysterese kommen.

In bevorzugter Weiterbildung weist die Kunststoffhülse in axialer Richtung wenigstens einen Schlitz auf.

Dieser Schlitz ist in der Lage, Abrieb aufzunehmen, der infolge des Anpreßdrucks der Kunststoffhülse an der Pedalwelle entsteht und das Reibmoment beeinflussen kann. Eine geschlitzte Kunststoffhülse, die beispielsweise einen über ihre gesamte Länge verlaufenden Axialschlitz aufweist, erlaubt in Verbindung mit der Andruckfeder auch eine gezieltere Aufbringung eines bestimmten radialen Anpreßdruckes.

In einer noch weiteren bevorzugten Ausführungsform der Erfindung ist vorgesehen, daß die Kunststoffhülse, deren hülsenförmige Andruckfeder und zwei als auf Torsion beanspruchte Schraubenfedern ausgebildete Rückstellfedern konzentrisch um die Pedalwelle angeordnet sind. Damit lassen sich alle wesentlichen Funktionselemente des Fahrpedals in äußerst raumsparender Weise anordnen und auch die Montage des Fahrpedals kann nach wie vor durch einfaches Einstecken der Pedalwelle in die vormontierte Einheit aus Grundplatte, Lagerbuchsen, Kunststoffhülse und Rückstellfedern erfolgen. Die zweite Rückstellfeder ist notwendig, um ein redundantes System zu erhalten, das im Versagensfall einer Rückstellfeder ausreichende Notlaufeigenschaften bereit hält.

Vorzugsweise ist an der Grundplatte ein Winkel angeordnet, der als Leerlaufanschlag in die Schwenkbahn der Pedalstange ragt. Ein derartiger Winkel läßt sich problemlos an der Grundplatte annieten oder anschweißen und kann entsprechend den individuellen Fahrzeuggegebenheiten geformt sein, um den Pedalweg an der gewünschten Stelle zu blockieren.

Im Bedarfsfall kann an der Grundplatte auch ohne weiteres eine Federklammer angeordnet sein, deren Schenkel unter Aufweitung die Pedalstange in der Kick-down-Stellung zwischen sich aufnehmen. Die zum Aufweiten der Schenkel der Federklammer notwendige Kraft erfordert einen erhöhten Druck auf das Fahrpedal, der dem Fahrer das Erreichen der Kick-down-Stellung signalisiert.

Nachfolgend wird anhand der beigefügten Zeichnungen näher auf Ausführungsbeispiele der Erfindung eingegangen. Es zeigen:
- Fig. 1: eine teilgeschnittene Draufsicht auf ein Fahrpedalmodul;
- Fig. 2: eine schematische Seitenansicht des Fahrpedalmodul nach Fig. 1 in der Vollaststellung;
- Fig. 3: eine bezüglich Fig. 2 um 90° gedrehte Seitenansicht;
- Fig. 4: eine Seitenansicht entsprechend Fig. 2 in der Leerlaufstellung des Fahrpedals.

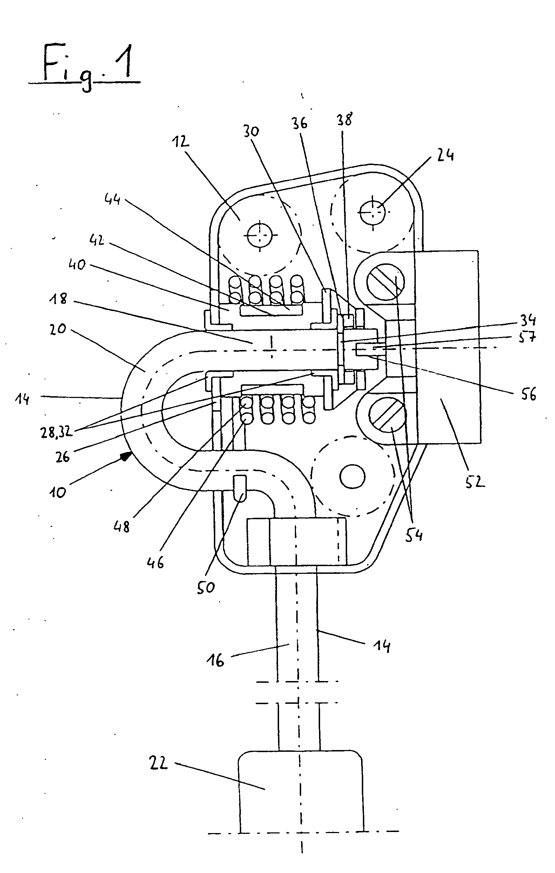

In Fig. 1 ist ein Fahrpedalmodul 10 dargestellt, das im wesentlichen aus einer Grundplatte 12 und einem an dieser gelagerten Fahrpedalhebel 14 besteht. Der Fahrpedalhebel 14 ist einstückig aus einem Rundstahl geformt, der an seinem einen Ende eine Pedalstange 16 und an seinem anderen Ende eine Pedalwelle 18 bildet, wobei der Stangenbereich 16 und der Wellenbereich 18 über eine im wesentlichen U-förmige Kröpfung 20 miteinander verbunden sind. Die Kröpfung 20 ist so ausgeführt, daß eine gedachte Verlängerung der Pedalstange 16 ungefähr im mittleren Bereich der Pedalwelle 18 liegt. Am freien Ende der Pedalstange 16 ist eine Pedalplatte 22 angeschweißt, die die Angriffsfläche für den Fuß des Autofahrers bildet.

Die Grundplatte 12, die mit Hilfe von drei Befestigungslöchern 24 fahrzeugseitig befestigt ist, besteht aus einem tiefgezogenen Stahlblech mit einem integrierten ersten Lagerbock 26, in welchen ein erstes Bundlager 28 aus Kunststoff zur Lagerung der Pedalwelle 18 gefügt ist. Ferner ist auf der Grundplatte 12 ein zweiter Lagerbock 30 aufgeschweißt, in welchen ein zweites Bundlager 32 zur Lagerung der Pedalwelle 18 gefügt ist. Die Pedalwelle 18 ist zwischen ihrem freien Ende und dem zweiten Bundlager 32 mit einer Umfangsnut 34 versehen, in welcher ein Federring 36 aufnehmbar ist. Der Federring 36 stützt sich einerseits am Bund des zweiten Bundlagers 32 und andererseits an einem gehäuseseitig festgelegten Federring 38 ab. Auf diese Weise wird durch die Montage eines einzigen wellenseitigen Federrings ein axiales Festlegen der Pedalwelle 18 in beiden Richtungen erreicht.

Zwischen den beiden Lagerböcken 26, 30 ist eine Kunststoffhülse 40 axial festgelegt, in welche die Pedalwelle 18 bei ihrer Montage beim Einstecken in die beiden Bundlager 28, 32 eingeschoben wird. Die Kunststoffhülse 40 dient als Reibpartner für die Pedalwelle 18 und verfügt zur Verstärkung des radialen Anpreßdruckes über eine Andruckfeder 42 in Form einer koaxial in einer Umfangsvertiefung 42 in ihrer Außenfläche sitzende Andruckfeder 44 in Form einer Federstahlhülse. Durch die Kunststoffhülse 40, die ohne erhöhten Montageaufwand bei der Montage der Pedalwelle 18 in den Bundlagern 28, 32 montiert werden kann, werden Reibmomente beim Verschwenken des Fahrpedalhebels 14 erzeugt, die zu einer wünschenswerten Hysterese der Betätigungskraft führen.

In koaxialer Anordnung um die Kunststoffhülse 40 ist eine erste Schraubenfeder 46 größeren Durchmessers und eine zweite Schraubenfeder 48 kleineren Durchmessers angeordnet. Die beiden auf Torsion belasteten Schraubenfedern sind unter Vorspannung einerseits in einer Kulisse (nicht gezeigt) in der Grundplatte 12 festgelegt und andererseits über Schenkel 50 an dem Fahrpedalhebel 14 eingehängt. Die beiden Schraubenfedern 46, 48 dienen als Rückstellfedern zum Rückstellen des Fahrpedalhebels 14 in Richtung seiner Leerlaufstellung, wobei die doppelte Anordnung für ein redundantes System mit Notlaufeigenschaften im Falle des Versagens einer der beiden Federn sorgt. Auch die beiden Schraubenfedern 46, 48 lassen sich problemlos vor dem Einschieben der Pedalwelle 18 in die Bundlager 28, 32 montieren.

Das freie Ende der Pedalwelle 18 steht mit dem beweglichen Teil eines Sensors 52, der mit Hilfe von Befestigungsschrauben 54 an der Grundplatte 12 montiert ist, drehstarr in Verbindung. Hierzu ist in dem freien Wellenende ein die Drehachse der Pedalwelle 18 schneidender Schlitz 56 vorgesehen, in welchen ein entsprechendes Klauenelement 57 eingreift, das beispielsweise mit dem Schleifer eines Potentiometers verbunden ist. Der gewählte formschlüssige Eingriff über den Schlitz 56 erlaubt ein einfaches Austauschen des Sensors 52 durch Lösen der Befestigungsschrauben 54, ohne daß wellenseitige Befestigungselemente gelöst werden müßten. Der Sensor 52 ist elektrisch mit einer Steuereinrichtung (nicht gezeigt) zur Steuerung eines Fahrzeugmotors verbunden, an welche er der Pedalstellung entsprechende elektrische Signale übermittelt. Statt des Schlitzes 56 sind auch andere drehstarre Verbindungen zwischen der Pedalwelle 18 und dem beweglichen Teil des Sensors 52 denkbar, beispielsweise Außen- oder Innenvierkantelemente, Verzahnungen oder dgl..

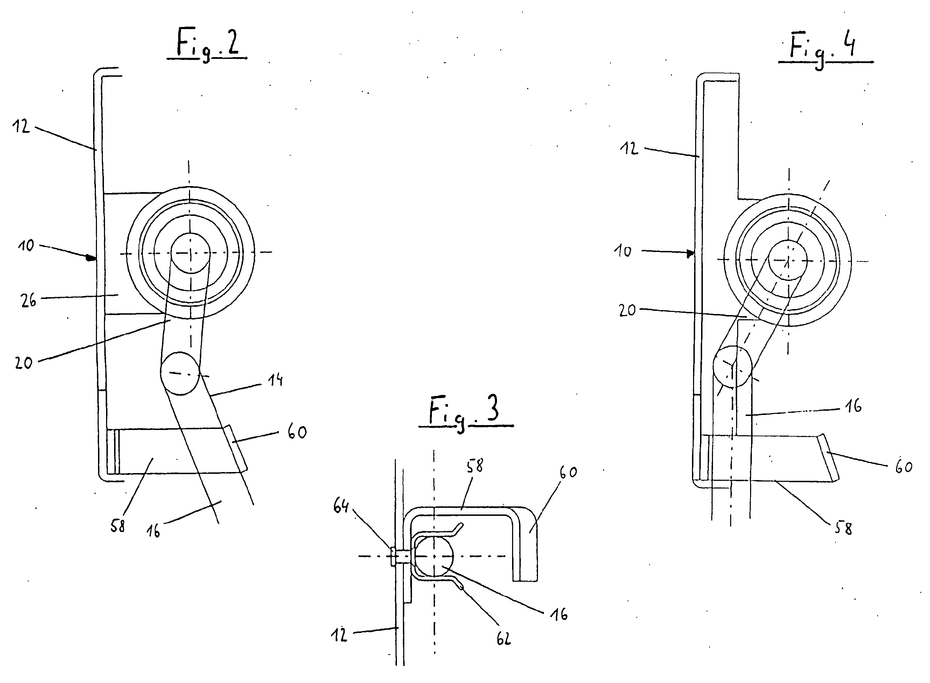

An der Grundplatte 12 ist weiterhin ein Blechwinkel 58 angebracht, dessen freier abgewinkelter Schenkel 60 in den Schwenkweg der Pedalstange 16 ragt. Auf diese Weise bildet der Schenkel 60 einen Leerlaufanschlag für den Fahrpedalhebel 14, der sich unter der Rückstellkraft der Schraubenfedern 46, 48 an den Schenkel 60 anlegt (siehe Fig. 4). Durch entsprechend geformte Blechwinkel läßt sich die Leerausstellung leicht an individuelle Fahrzeugtypen anpassen.

Weiterhin ist an der Grundplatte (12) eine Federklammer 62 festgelegt, deren Schenkel bei Vollaststellung des Fahrpedals die Pedalstange 16 in federnder Anlage umfassen (siehe Fig. 2 und 3). Daher ist zum Erreichen der Vollaststellung des Fahrpedals ein erhöhter Pedaldruck notwendig, wie dies beispielsweise bei Fahrzeugen mit Automatikgetrieben in der Kick-down-Stellung bekannt ist. Mit Hilfe der Federklammer 62 läßt sich somit auf einfache Weise ein Kick-down-Schalter simulieren. Da die Federklammer 62 ebenfalls in der Schwenkebene der Pedalstange 16 liegt, können der Blechwinkel 58 und die Federklammer 62 mit Hilfe eines einzigen Niets 64 gemeinsam an der Grundplatte 12 festgelegt sein. Bei Fahrpedalmodulen ohne Kick-down-Stellung kann der Blechwinkel 58 auch an der Grundplatte 12 angeschweißt sein.

Statt des in dem dargestellten Ausführungsbeispiel abgekröpften Pedalhebels 14 sind auch gebaute Varianten denkbar, bei welchen die Pedalstange 16 über einen Verbindungshebel seitlich an der Pedalwelle 18 angeschweißt ist. Auf diese Weise läßt sich der Bauraum des Fahrpedalmoduls verkleinern, da der Pedalhebel 14 dann nicht mehr so weit über die Grundplatte 12 hinausragt. Es sind allerdings zusätzliche Montageschritte zur Herstellung des Fahrpedalshebels 14 selbst notwendig.

## Patentansprüche

1. Fahrzeugpedal mit einer Pedalstange (16) und einer drehstarr mit dieser verbundenen Pedalwelle (18), an welcher Lagerstellen (28, 32) vorgesehen sind, wobei die Pedalstange (16) an ihrem Ende eine Kröpfung (20) aufweist, so daß sie seitlich der beiden Lagerstellen (28, 32) an der Pedalwelle (18) angeformt ist, **dadurch gekennzeichnet, daß** die Pedalstange (16) und die Pedalwelle (18) einstückig ausgebildet sind, wobei die im Querschnitt kreisförmige Pedalstange (16) an ihrem Ende zur Bildung der Pedalwelle (18) im wesentlichen rechtwinklig abgekröpft ist.

2. Fahrpedalmodul mit einem Fahrzeugpedal nach Anspruch 1, **dadurch gekennzeichnet, daß** die beiden Lagerstellen der Pedalwelle (18) über Lager (28, 32) verfügen, die in auf einer Grundplatte (12) angeordneten Lagerböcken (26, 30) festgelegt sind.

3. Fahrpedalmodul nach Anspruch 2, **dadurch gekennzeichnet, daß** die Grundplatte (12) aus Blech geformt ist, wobei wenigstens ein Lagerbock (26) einstückig mit der Grundplatte (12) ausgebildet ist.

4. Fahrpedalmodul nach Anspruch 2 oder 3, **dadurch gekennzeichnet, daß** wenigstens ein Lagerbock (30) auf der Grundplatte (12) aufgeschweißt ist.

5. Fahrpedalmodul nach einem der Ansprüche 2 bis 4, **dadurch gekennzeichnet, daß** Bundbuchsen (28, 32) als Lager für die Pedalwelle (18) in Öffnungen in den Lagerböcken (26, 30) eingefügt sind.

6. Fahrpedalmodul nach Anspruch 5, **dadurch gekennzeichnet, daß** zwischen der äußeren Bundbuchse (32) und dem freien Ende der Pedalwelle (18) auf dieser ein Federring (36) axial festgelegt ist, der sich einerseits am Bund der äußeren Bundbuchse (32) und andererseits an einem an dem zugehörigen Lagerbock (30) oder an der Grundplatte (12) festgelegten zweiten Federring (38) axial abstützt.

7. Fahrpedalmodul nach einem der Ansprüche 2 bis 6, **dadurch gekennzeichnet, daß** das freie Ende der Pedalwelle (18) drehstarr mit einem Drehwinkelsensor (52) lösbar gekoppelt ist.

8. Fahrpedalmodul nach Anspruch 7, **dadurch gekennzeichnet, daß** das freie Ende der Pedalwelle (18) geschlitzt ist und ein Klauenelement (57) des Sensors (52) in den Schlitz (56) eingreift.

9. Fahrpedalmodul nach einem der Ansprüche 2 bis 8, **dadurch gekennzeichnet, daß** zwischen den Lagerstellen (28, 32) der Pedalwelle (18) drehfest mit Bezug auf die Grundplatte (12) eine Kunststoffhülse (40) angeordnet ist, die einen radialen Anpreßdruck auf die Umfangsfläche der Pedalwelle (18) ausübt.

10. Fahrpedalmodul nach Anspruch 9, **dadurch gekennzeichnet, daß** die Kunststoffhülse (40) über eine Andruckfeder (44) verfügt, die den radialen Anpreßdruck aufbringt oder erhöht.

11. Fahrpedalmodul nach Anspruch 9 oder 10, **dadurch gekennzeichnet, daß** die Kunststoffhülse (40) in axialer Richtung wenigstens einen Schlitz aufweist.

12. Fahrpedalmodul nach einem der Ansprüche 2 bis 11, **dadurch gekennzeichnet, daß** zwischen der Grundplatte (12) und der Pedalstange (16) wenigstens eine vorgespannte Rückstellfeder (46, 48) vorgesehen ist.

13. Fahrpedalmodul nach Anspruch 12, **dadurch gekennzeichnet, daß** die Kunststoffhülse (40), deren hülsenförmige Andruckfeder (44) und zwei als auf Torsion beanspruchte Schraubenfedern (46, 48) ausgebildete Rückstellfedern konzentrisch um die Pedalwelle (18) angeordnet sind.

14. Fahrpedalmodul nach einem der Ansprüche 2 bis 13, **dadurch gekennzeichnet, daß** an der Grundplatte (12) ein Winkel (58, 60) angeordnet ist, der als Leerlaufanschlag in die Schwenkbahn der Pedalstange (16) ragt.

15. Fahrpedalmodul nach einem der Ansprüche 2 bis 14, **dadurch gekennzeichnet, daß** an der Grundplatte (12) eine Federklammer (62) angeordnet ist, deren Schenkel unter Aufweitung die Pedalstange (16) in deren Kick-down-Stellung zwischen sich aufnehmen.

16. Fahrpedalmodul nach Anspruch 14 oder 15, **dadurch gekennzeichnet, daß** der Winkel (58) und die Federklammer (62) gemeinsam mit einem Niet (64) an der Grundplatte (12) befestigt sind.

## Claims

1. Vehicle pedal having a pedal bar (16) and a pedal shaft (18) which is connected to the latter in a rotationally fixed manner and on which bearing locations (28, 32) are provided, the pedal bar (16) having an angled portion (20) at its end, so that it is integrally formed on the pedal shaft (18) to the side of the two bearing locations (28, 32), **characterized in that** the pedal bar (16) and the pedal shaft (18) are designed in one piece, the cross-sectionally circular pedal bar (16) being angled essentially at right angles at its end in order to form the pedal shaft (18).

2. An accelerator-pedal module having a vehicle pedal according to Claim 1, **characterized in that** the two bearing locations of the pedal shaft (18) have bearings (28, 32) which are secured in bearing blocks (26, 30) arranged on a base plate (12).

3. Accelerator-pedal module according to Claim 2, **characterized in that** the base plate (12) is formed from sheet metal, at least one bearing block (26) being designed in one piece with the base plate (12).

4. Accelerator-pedal module according to Claim 2 or 3, **characterized in that** at least one bearing block (30) is welded on the base plate (12).

5. Accelerator-pedal module according to one of Claims 2 to 4, **characterized in that** flange bushings (28, 32) are introduced, as bearings for the pedal shaft (18), in openings in the bearing blocks (26, 30).

6. Accelerator-pedal module according to Claim 5, **characterized in that** secured axially on the pedal shaft (18), between the outer flange bushing (32) and the free end of said pedal shaft, is a lock washer (36) which is supported axially, on one side, on the flange of the outer flange bushing (32) and, on the other side, on a second lock washer (38), which is secured on the associated bearing block (30) or on the base plate (12).

7. Accelerator-pedal module according to one of Claims 2 to 6, **characterized in that** the free end of the pedal shaft (18) is releaseably coupled to an angle-of-rotation sensor (52) in a rotationally fixed manner.

8. Accelerator-pedal module according to Claim 7, **characterized in that** the free end of the pedal shaft (18) is slotted, and a claw element (57) of the sensor (52) engages in the slot (56).

9. Accelerator-pedal module according to one of Claims 2 to 8, **characterized in that** a plastic sleeve (40) is arranged between the bearing locations (28, 32) of the pedal shaft (18), in a rotationally fixed manner in relation to the base plate (12), and exerts a radial contact pressure on the circumferential surface of the pedal shaft (18).

10. Accelerator-pedal module according to Claim 9, **characterized in that** the plastic sleeve (40) has a contact-pressure spring (44) which applies or increases the radial contact pressure.

11. Accelerator-pedal module according to Claim 9 or 10, **characterized in that** the plastic sleeve (40) has at least one slot in the axial direction.

12. Accelerator-pedal module according to one of Claims 2 to 11, **characterized in that** at least one prestressed restoring spring (46, 48) is provided between the base plate (12) and the pedal bar (16).

13. Accelerator-pedal module according to Claim 12, **characterized in that** the plastic sleeve (40), the sleeve-like contact-pressure spring (44) of the latter and two restoring springs designed as helical springs (46, 48) which are subjected to torsion are arranged concentrically around the pedal shaft (18).

14. Accelerator-pedal module according to one of Claims 2 to 13, **characterized in that** arranged on the base plate (12) is an angle (58, 60) which projects, as an idling stop, into the pivot path of the pedal bar (16).

15. Accelerator-pedal module according to one of Claims 2 to 14, **characterized in that** arranged on the base plate (12) is a spring clip (62), of which the legs widen to receive between them the pedal bar (16) in its kickdown position.

16. Accelerator-pedal module according to Claim 14 or 15, **characterized in that** the angle (58) and the spring clip (62) are fastened together on the base plate (12) by way of a rivet (64).

## Revendications

1. Pédale de véhicule comportant une tige de pédale (16) et un arbre de pédale (18), lié à cette dernière en blocage de rotation et sur lequel sont prévus des points d'appui (28, 32), la tige de pédale (16) ayant un coude (20) à son extrémité de telle manière qu'elle est usinée, latéralement par rapport aux deux points d'appui (28, 32), en prolongement de l'arbre de pédale (18), **caractérisée par le fait que** la tige de pédale (16) et l'arbre de pédale (18) sont conçus en une seule et unique pièce, la tige de pédale (16), dont la section est circulaire, étant coudée essentiellement à angle droit à son extrémité pour former l'arbre de pédale (18).

2. Module de pédale de l'accélérateur comportant une pédale de véhicule selon la revendication 1, **caractérisé par le fait que** les deux points d'appui de l'arbre de pédale (18) disposent de paliers (28, 32) qui sont fixés dans des supports de paliers (26, 30) disposés sur une plaque de base (12).

3. Module de pédale de l'accélérateur selon la revendication 2 **caractérisé par le fait que** la plaque de base (12) est usinée en tôle, au moins un support de palier (26) étant usiné en une seule et unique pièce avec la plaque de base (12).

4. Module de pédale de l'accélérateur selon la revendication 2 ou 3 **caractérisé par le fait que** au moins un support de palier (30) est brasé sur la plaque de base (12).

5. Module de pédale de l'accélérateur selon l'une des revendications 2 à 4 **caractérisé par le fait que** des douilles à collet (28, 32) sont insérées en tant que paliers pour l'arbre de pédale (18) dans des ouvertures dans les supports de paliers (26, 30).

6. Module de pédale de l'accélérateur selon la revendication 5 **caractérisé par le fait que**, entre la douille à collet extérieure (32) et l'extrémité libre de l'arbre de pédale (18), une rondelle élastique bombée (36) est arrêtée sur ce dernier dans le sens axial et s'appuie, dans le sens axial, d'une part, sur le collet de la douille à collet extérieure (32) et, d'autre part, sur une deuxième rondelle élastique bombée (38) fixée au support de palier correspondant (30) ou à la plaque de base (12).

7. Module de pédale de l'accélérateur selon l'une des revendications 2 à 6 **caractérisé par le fait que** l'extrémité libre de l'arbre de pédale (18) est couplé en blocage de rotation, d'une façon démontable, à un capteur (52) d'angle de rotation.

8. Module de pédale de l'accélérateur selon la revendication 7 **caractérisé par le fait que** l'extrémité libre de l'arbre de pédale (18) a une fente et qu'une patte d'accouplement (57) du capteur (52) s'engage dans la fente (56).

9. Module de pédale de l'accélérateur selon l'une des revendications 2 à 8 **caractérisé par le fait que**, entre les points d'appui (28, 32) de l'arbre de pédale (18), une douille en matière plastique (40) est disposée en blocage de rotation par rapport à la plaque de base (12) et exerce une force de pression radiale sur la surface périphérique de l'arbre de pédale (18).

10. Module de pédale de l'accélérateur selon la revendication 9 **caractérisé par le fait que** la douille en matière plastique (40) dispose d'un ressort de pression (44) qui produit ou augmente la force de pression radiale.

11. Module de pédale de l'accélérateur selon la revendication 9 ou 10 **caractérisé par le fait que** la douille en matière plastique (40) comporte dans le sens axial au moins une fente.

12. Module de pédale de l'accélérateur selon l'une des revendications 2 à 11 **caractérisé par le fait que**, entre la plaque de base (12) et la tige de pédale (16), il est prévu au moins un ressort de rappel (46, 48) soumis à une précontrainte.

13. Module de pédale de l'accélérateur selon la revendication 12 **caractérisé par le fait que** la douille en matière plastique (40), son ressort de pression (44) en forme de douille et deux ressorts de rappel conçus sous la forme de ressorts hélicoïdaux (46, 48) soumis à une torsion sont disposés concentriquement autour de l'arbre de pédale (18).

14. Module de pédale de l'accélérateur selon l'une des revendications 2 à 13 **caractérisé par le fait qu'**un coude (58, 60) est disposé sur la plaque de base (12) et fait saillie en tant que butée de ralenti dans la trajectoire de pivotement de la tige de pédale (16).

15. Module de pédale de l'accélérateur selon l'une des revendications 2 à 14 **caractérisé par le fait qu'**est disposée, sur la plaque de base (12), une sauterelle de fixation (62), dont les branches accueillent entre elles, en s'écartant, la tige de pédale (16) dans la position de rétrogradation forcée.

16. Module de pédale de l'accélérateur selon la revendication 14 ou 15 **caractérisé par le fait que** le coude (58) et la sauterelle de fixation (62) sont fixés ensemble sur la plaque de base (12) par un rivet (64).
